# DEMANDE DE BREVET EUROPEEN

(11) **EP 0 660 025 A1**
(43) Date de publication de la demande: **28.06.1995**
(21) Numéro de dépôt: 94420368.6
(22) Date de dépôt: 20.12.1994
(51) Int. Cl.: F16L 59/02

(54) **Elément de renforcement utilisable notamment pour la réfection de conduites**

(30) Priorité: 24.12.1993 FR 9315842
(71) Demandeur: ETABLISSEMENT LES FILS D'AUGUSTE CHOMARAT & CIE, F-75008 Paris (FR)
(72) Inventeur: Fourezon, André, F-07160 Le Cheylard (FR)
(74) Mandataire: Laurent, Michel

(57) **Abrégé**

Elément de renforcement permettant de réaliser une structure tubulaire utilisable notamment pour la réfection de conduites, constitué par un support textile (1) pouvant être imprégné d'une résine non polymérisée, et qui est recouvert sur au moins une de ses faces d'une couche superficielle étanche (2), ledit support textile ayant une structure telle que lorsqu'il est mis sous une forme tubulaire, il possède la caractéristique de pouvoir se déformer radialement tout en étant bloqué sous un effort de traction dans le sens longitudinal.

Il se caractérise en ce qu'il est constitué d'au moins deux bandes (4,5) de tissu chaine et trame (ou non tissé constitué de nappes superposées de fils longitudinaux et transversaux), se recouvrant sur la moitié de leur largeur et étant liées entre elles dans cette zone de manière à pouvoir glisser l'une par rapport à l'autre sous l'action d'une contrainte interne lorsque ledit élément est mis sous forme tubulaire.

## Description

Pour la réfection de conduites, ou ouvrages similaires, enterrés ou non, il a été proposé depuis fort longtemps, ainsi que cela ressort notamment des brevets britanniques 1 340 068 et 1 357 355, de recouvrir la surface interne de l'ouvrage d'un matériau complexe flexible comportant une membrane imperméable aux fluides et une structure de base fibreuse qui est imprégnée d'une résine synthétique non polymérisée. Après placage dudit complexe contre la surface de l'ouvrage à réparer, on provoque la polymérisation de la résine de manière à former un "manchonnage" interne.

Pour la mise en oeuvre d'une telle technique, utilisée avec succès de nos jours, l'un des principaux problèmes qui se posent est celui de la réalisation du complexe structure fibreuse/couche superficielle imperméable, étant donné qu'il doit non seulement présenter des caractéristiques mécaniques suffisantes pour permettre sa mise en place à l'intérieur de l'ouvrage, mais également avoir une structure telle qu'elle puisse pouvoir se déformer radialement pour épouser les irrégularités de la surface à l'intérieur de l'ouvrage à rénover.

Par ailleurs, après rénovation, la structure doit conférer une résistance suffisante à l'écrasement du aux poussées extérieures lorsque la conduite est enterrée, et ce plus particulièrement lorsque cette conduite sert à véhiculer des gaz.

Dans son brevet français 2 683 888, le Demandeur a proposé une structure complexe qui présente comme caractéristique essentielle d'avoir un blocage dimensionnel sous un effort de traction dans le sens longitudinal, tout en autorisant une certaine déformation (ou allongement) sous l'action de contraintes exercées dans le sens transversal, et qui est particulièrement adaptée pour réaliser la rénovation de conduites servant à véhiculer des liquides et qui présentent un état de surface avant rénovation irrégulier. En effet, la possibilité de déformation (ou allongement) sous l'action de contraintes exercées dans le sens transversal, permet à cette structure de pouvoir se déformer, ce qui lui permet de plaquer parfaitement contre la surface de la paroi à rénover, lorsque la structure est mise sous pression, avant de provoquer la polymérisation de la résine qui l'imprègne.

Cette possibilité de déformation est cependant directement fonction des éléments de renforcement que comporte la structure décrite dans ce document.

Si ces éléments de renforcement sont constitués uniquement par une série de mèches filamentaires disposées dans le sens long, la possibilité de déformation sera relativement importante. En revanche, dans ce cas, la structure n'est pas adaptée pour présenter une bonne résistance à l'écrasement sous l'action de poussées extérieures.

Si, comme il est prévu dans le brevet précité, la structure de renforcement peut être constituée par un tissu chaine et trame, compte tenu du fait qu'après réalisation d'une structure tubulaire, les fils de trame se trouvent disposés circonférentiellement, il y aura un blocage limitant les possibilités de déformation de la gaine tubulaire qui pourra donc ne pas plaquer parfaitement contre la surface de la paroi de la conduite à rénover.

De plus, la mise sous forme tubulaire d'un complexe plat préalablement réalisé, implique de réaliser une liaison entre les deux bords latéraux dudit complexe, par exemple par couture, soudure, collage.. . La mise en place à l'intérieur de la conduite de la structure tubulaire et son placage contre la paroi à rénover, étant en général réalisée en le mettant sous pression, cela peut entraîner un affaiblissement voire même une rupture au niveau de la zone de liaison.

Or on a trouvé, et c'est ce qui fait l'objet de la présente invention, un nouveau type d'élément de renforcement qui permet de réaliser une structure tubulaire utilisable notamment pour la réfection de conduites et qui, non seulement présente la caractéristique d'être bloqué dimensionnellement sous un effort de traction dans le sens longitudinal mais également, a la propriété de s'allonger ou déformer dans le sens radial lui permettant ainsi d'épouser parfaitement la surface de la conduite à l'intérieur de laquelle il est appliqué et ce, même si cette dernière présente des déformations importantes. Par ailleurs, la structure de l'élément de renforcement conforme à l'invention permet également de faciliter la liaison des bords latéraux lorsque l'on forme la structure tubulaire et évite la formation d'une surépaisseur dans cette zone de liaison et élimine également les risques d'affaiblissement ou de rupture au niveau de cette zone de liaison.

D'une manière générale, l'élément de renforcement conforme à l'invention est du type constitué par un support textile pouvant être imprégné d'une résine non polymérisée, et qui est recouvert sur au moins une de ses faces d'une couche superficielle étanche, ledit support textile ayant une structure telle que lorsqu'il est mis sous une forme tubulaire, il possède la caractéristique de pouvoir se déformer radialement tout en étant bloqué sous un effort de traction dans le sens longitudinal et il se caractérise en ce qu'il est constitué d'au moins deux bandes de tissu chaine et trame (ou éventuellement non tissé constitué de nappes superposées de fils longitudinaux et transversaux), se recouvrant sur la moitié de leur largeur et étant liées entre elles dans cette zone de manière à pouvoir glisser l'une par rapport à l'autre sous l'action d'une contrainte interne lorsque ledit élément est mis sous forme tubulaire.

La liaison des bandes de tissu chaîne et trame entre elles est réalisée par exemple par couture ou couture/tricotage, et ce de telle manière que le complexe formé ne soit pas bloqué transversalement.

Bien entendu, la couche superficielle étanche qui recouvre le support textile, doit également pouvoir s'allonger sous l'action d'une contrainte interne de manière à suivre les déformations dudit renfort textile.

Une telle couche étanche sera, par exemple, à base de PVC, d'un élastomère (néoprène) ou de tout autre matériau approprié étanche et résistant au milieu qui circule à l'intérieur de la conduite.

S'il peut être envisagé de réaliser un élément de renfort conforme à l'invention ne comportant que deux bandes de tissu superposées de manière décalée l'une par rapport à l'autre, avantageusement, ledit renfort textile comportera un plus grand nombre de bandes élémentaires, par exemple trois ou quatre, voire même plus si l'on se trouve dans la configuration d'avoir à renforcer une structure tubulaire de très grandes dimensions, ce qui permet de mieux répartir les déplacements relatifs des différentes bandes les unes par rapport aux autres.

Par ailleurs, si pour certaines applications, un complexe constitué uniquement d'une structure de renfort conforme à l'invention associée à un film étanche, peut être utilisé, en général, cette structure de renfort sera combinée à d'autres structures textiles tel que par exemple mat de fibres de verre ou autres nappes fibreuses non tissées. Parmi le type de structure pouvant être associée au renfort conforme à l'invention, on peut citer celles décrites dans le brevet français 2 646 442, et dont il a été constaté qu'elles convenaient non seulement pour la réalisation d'articles moulés, mais qu'elles étaient par ailleurs parfaitement adaptées pour la réalisation de nappes préimprégnées de résine non polymérisées, telles que celles qui sont utilisées lors de la réfection de conduites.

L'invention et les avantages qu'elle apporte sera cependant mieux comprise grâce aux exemples de réalisation donnés ci-après à titre indicatif et non limitatif et qui sont illustrés par les figures annexées dans lesquelles :
- la figure 1 est une vue schématique en coupe et perspective d'une structure complexe utilisant un matériau de renforcement réalisé conformément à l'invention ;
- la figure 2 illustre la manière dont se présentent les différents constituants d'un tel matériau complexe lors de la mise en place à l'intérieur d'une conduite et au début de sa mise en forme pour la faire plaquer contre la paroi de ladite conduite ;
- la figure 3 illustre, également de manière schématique en coupe et perspective, le positionnement des différents éléments de la structure complexe conforme à l'invention après mise en pression à l'intérieur de la conduite ;
- la figure 4 illustre une variante du matériau de renforcement conforme à l'invention, plus particulièrement adapté lorsque l'on souhaite réaliser des renforts de faible épaisseur.

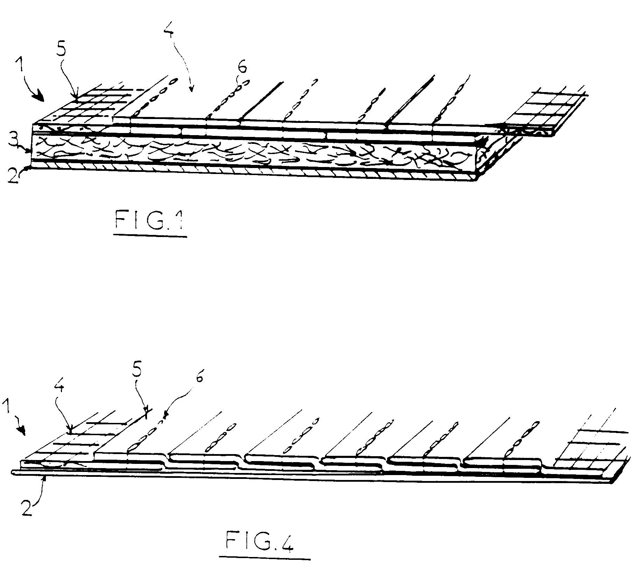

En se reportant aux figures annexées, et plus particulièrement aux figures 1 et 4, le matériau de renfort conforme à l'invention, désigné par la référence générale (1), est donc constitué par un support textile qui peut être imprégné d'une résine non polymérisée et qui est recouvert sur au moins une de ses faces d'une couche (2) superficielle étanche. Le renfort conforme à l'invention peut être utilisé soit seul comme illustré à la figure 4, soit de préférence, associé à une structure fibreuse non tissée (3) comme représentée à la figure 1. Cette structure fibreuse non tissée peut, par exemple, être constituée d'un complexe tel que décrit dans le FR-A-2 646 442.

Par ailleurs, la réalisation de la couche superficielle étanche (2) peut être réalisée conformément aux enseignements du FR-A-2 683 888 et ne sera donc pas décrite en détail par mesure de simplification dans la suite de la description.

Le renfort textile (1) conforme à l'invention a une structure telle que lorsqu'il est mis sous une forme tubulaire, il possède la caractéristique de pouvoir se déformer radialement tout en étant bloqué sous un effort de traction dans le sens longitudinal.

En se reportant aux figures 1 et 4, un tel matériau est donc constitué d'au moins deux bandes de tissu (4,5), bandes schématisées sur ces figures, les fils de chaine et de trame étant simplement esquissés aux deux extrémités du complexe formé.

Ces tissus peuvent être des tissus chaine et trame ou éventuellement des structures non tissées constituées de nappes superposées de fils longitudinaux et transversaux liés entre eux par collage. Les bandes de tissu (4,5) sont superposées de telle sorte qu'elles se recouvrent sur la moitié de la largeur. Elles sont liées entre elles dans la zone de superposition de manière à pouvoir glisser l'une par rapport à l'autre sous l'action d'une contrainte interne lorsque ledit élément est mis sous forme tubulaire. La liaison (6) peut être réalisée par exemple par couture ou couture/tricotage réalisée dans le sens de la longueur du complexe afin de ne pas le bloquer transversalement.

S'il peut être envisagé de réaliser un élément de renfort (1) conforme à l'invention ne comportant que deux bandes de tissu superposées de manière décalée l'une par rapport à l'autre, de préférence, comme cela ressort des figures 1 et 4, ledit renfort textile (1) comportera un plus grand nombre de bandes élémentaires. Ainsi, dans les deux exemples de réalisation illustrés aux figure 1 et 4, le renfort textile (1) conforme à l'invention est constitué de six bandes de tissu superposées de manière décalée l'une par rapport à l'autre. Dans le mode de réalisation illustré à la figure 1, la superposition des bandes est faite dans deux plans parallèles, alors que dans le mode de réalisation illustré à la figure 4, lesdites bandes élémentaires (4,5) se chevauchent alternativement.

Enfin, il convient de noter que le tissu entrant dans la réalisation des bandes permettant de former le renfort conforme à l'invention, peut avoir une densité en fils de chaine faible.

### Exemple 1:

De la manière énoncée précédemment, et comme illustré à la figure 1, on réalise un complexe comportant une structure de renforcement (1) conforme à l'invention constituée de trois bandes de tissu (4) superposées par moitié avec trois bandes identiques de tissu (5).

Comme tissu, on utilise des tissus chaine et trame pesant 800g/m2, réalisés à partir de fils de verre ayant un titre de 1200 tex en trame et 320 tex en chaine. La densité en trame est de 5,5 fils/centimètre et celle en chaine de 4,7 fils/centimètres. Les bandes (4,5) superposées sont liées entre elles au moyen de coutures (6) réalisées en fils polyester ayant un titre de 167 decitex.

A ce renfort (1), est associée une structure fibreuse complexe (3), qui est constituée d'une couche non tissée à base de fibres de polypropylène préalablement frisé ayant un titre unitaire de 70 dtex et une longueur de coupe de 90 mm et pesant 250 g/m2 pour une épaisseur de 4 mm. De part et d'autre de cette structure non tissée, est disposé un mat de verre pesant 450 g/m2 (fibres de 25 tex/50 mm), les différentes couches étant liées entre elles par couture/tricotage au moyen d'un fil polyester. L'ensemble est recouvert d'une couche de matière étanche (2) constituée par un film étanche complexe du type polyéthylène/polyamide/polyéthylène ayant une épaisseur d'environ 0,3 mm.

Un tel matériau est particulièrement adapté pour réaliser des renforts de forte épaisseur.

Il est évident que l'on pourrait réaliser des complexes équivalents en utilisant d'autres types de fibres que des fibres de polypropylène, par exemple des fibres à base de polyester, polyamide, ces fibres ayant un titre élevé (au moins 40 dtex). Par ailleurs, le film étanche pourrait être à base de polyéthylène modifié.

### Exemple 2:

Cet exemple est illustré par la figure 4 et est également réalisé à partir de bandes tissées (4,5) ayant les mêmes caractéristiques que dans l'exemple 1.

Ce complexe est différent du précédent par l'absence de la nappe fibreuse complexe (3) et par la manière dont les différentes bandes élémentaires (4,5) sont superposées les unes par rapport aux autres.

Un tel matériau est plus particulièrement adapté pour la réalisation de renforts de faible épaisseur.

La mise sous forme tubulaire des matériaux conformes à l'invention est très aisée à réaliser et peut être faite sur le site même où se trouve la conduite à rénover. En effet, pour réaliser un tel tube, il suffit de replier l'un contre l'autre les deux bords latéraux de la structure plane que forme le complexe conforme à l'invention. Comme ces deux bords latéraux ont des profils complémentaires, on peut donc réaliser une liaison par tous moyens appropriés, tels que par exemple par collage et/ou couture qui ne forme aucune protubérance au niveau de la zone de jonction. Eventuellement, ces deux bords pourraient être équipés de moyens complémentaires permettant d'assurer leur jonction.

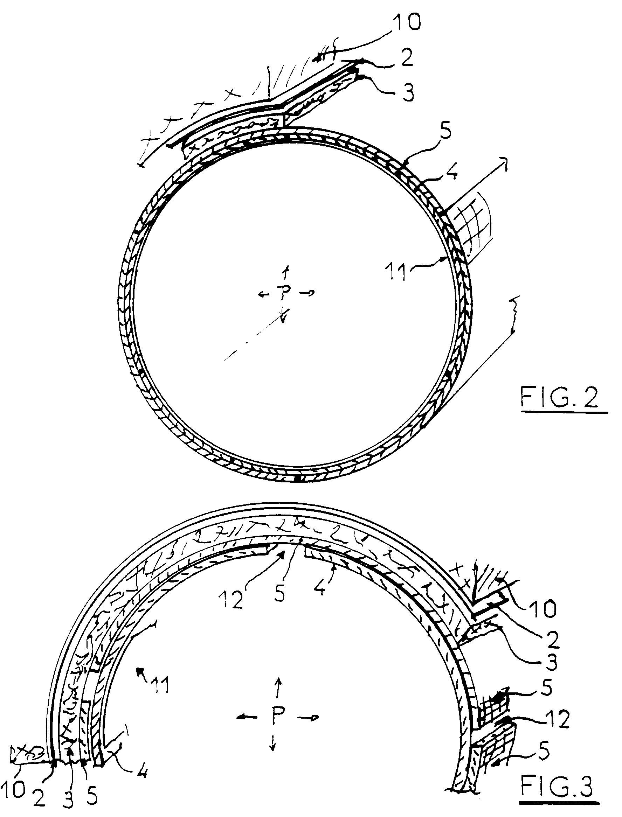

Une telle mise en oeuvre ressort plus particulièrement des figures 2 et 3 qui illustrent la mise en place d'une structure tubulaire obtenue à partir d'un matériau tel qu'illustré à la figure 1, et ce pour rénover une conduite (10).

D'une manière conventionnelle, le matériau préalablement imprégné de résine est mis sous forme tubulaire et est introduit à l'intérieur de la conduite (10). Lors de la mise en place, un film (11) tubulaire est positionné à l'intérieur de la structure imprégnée de résine. La mise en place est réalisée de telle sorte que la couche étanche (2) soit disposée du côté de la paroi interne de la conduite (10), et que la structure complexe (1) conforme à l'invention soit située du côté intérieur.

Lorsque l'ensemble a été complètement introduit sur toute la longueur de la conduite que l'on souhaite rénover, on le fait plaquer contre la paroi en le mettant sous pression. La figure 2 illustre le début de la phase de mise sous pression. Dans cet état, les bandes élémentaires (4,5) sont maintenues bord à bord comme illustré à la figure 1.

Sous l'action de la pression P, et, si certaines zones présentent des déformations (renfoncements), comme les bandes élémentaires (4,5) peuvent s'écarter les unes des autres (espaces (12) montrés à la figure 3), le complexe plaque cependant parfaitement contre la surface interne de la conduite.

Après polymérisation de la résine, on obtient un manchonnage interne de la conduite qui non seulement est très régulier, et qui par ailleurs, présente une très grande résistance radiale à l'écrasement dû aux poussées extérieures, du fait que les fils de trame de chaque bande élémentaire entrant dans la réalisation de la structure de renfort conforme à l'invention, se trouvent disposés circonférentiellement. Les faiblesses qui peuvent exister lorsque les bandes élémentaires se trouvent légèrement écartées l'une de l'autre, sont compensées par le fait qu'en regard de cette zone, se trouvent obligatoirement disposés les fils de trame de la deuxième couche de tissu que comporte le matériau conforme à l'invention.

Bien entendu, l'invention n'est pas limitée aux exemples de réalisation décrits précédemment, mais elle en couvre toutes les variantes réalisées dans le même esprit.

## Revendications

**1/** Elément de renforcement permettant de réaliser une structure tubulaire utilisable notamment pour la réfection de conduites, constitué par un support textile (1) pouvant être imprégné d'une résine non polymérisée, et qui est recouvert sur au moins une de ses faces d'une couche superficielle étanche (2), ledit support textile ayant une structure telle que lorsqu'il est mis sous une forme tubulaire, il possède la caractéristique de pouvoir se déformer radialement tout en étant bloqué sous un effort de traction dans le sens longitudinal, caractérisé en ce qu'il est constitué d'au moins deux bandes (4,5) de tissu chaine et trame (ou non tissé constitué de nappes superposées de fils longitudinaux et transversaux), se recouvrant sur la moitié de leur largeur et étant liées entre elles dans cette zone de manière à pouvoir glisser l'une par rapport à l'autre sous l'action d'une contrainte interne lorsque ledit élément est mis sous forme tubulaire.

**2/** Elément selon la revendication 1, caractérisé en ce qu'il est associé à d'autres structures textiles (3), tels que mat de fibres de verre ou autres nappes fibreuses non tissées.
